# EUROPEAN PATENT APPLICATION

(11) **EP 4 183 523 A1**
(43) Date of publication of application: **24.05.2023**
(21) Application number: 22204705.2
(22) Date of filing: 31.10.2022
(51) Int. Cl.: B25F 5/00

(54) **PORTABLE POWER SUPPLY DEVICE FOR AN ELECTRIC TOOL**

(30) Priority: 18.11.2021 CN 202111370840
(71) Applicant: Techtronic Cordless GP, Anderson, SC 29621 (US)
(72) Inventor: LEE, Wai Chung, Kwai Chung (HK); YANG, Shao Kang, Dongguan City (CN); PAN, Zheng Qian, Dongguan City (CN); AVILA, Gerardo Quintanilla, Dongguan City (CN)
(74) Representative: Zimmermann & Partner Patentanwälte mbB

(57) **Abstract**

A portable power supply device for an electric tool comprises: a power supply receiving portion, provided in or on a housing and used to receive a power supply supplying power to the electric tool, and a control unit, comprising a controller that is provided in the housing and is used to control the electric energy supplied to the electric tool. The power supply receiving portion comprises a power supply compartment, which is at least partially defined by a cover which can move relative to the housing between an opened position and a closed position. The power supply device further comprises a positioning accessory detachably and replaceably attached to the housing and/or the power supply receiving portion.

## Description

### Technical Field

The present invention relates to a portable power supply device, in particular a portable power supply device for an electric tool, for example, a submersible pump.

### Background Art

With the development of battery technology, more and more electric tools are using batteries to supply power. Although AC electric tools can usually provide higher power and will not suffer from restricted time of use, the market for battery-driven DC electric tools has rapidly been developed by virtue of their manoeuvrability and portability. With most DC electric tools, a battery mounting interface is provided on the housings to allow a user to quickly replace the battery when the battery energy is used up.

Some electric tools may be placed in an environment where the battery may be damaged. For example, garden pumps usually work in a rain or water environment, and they may be placed in a pool or water tank. To obtain portability, a battery compartment sealed off from the external environment is provided in the housing of such electric tools to protect the battery. However, when the battery energy is used up, it is necessary to take the electric tool out of the working environment to replace the battery. In addition, the battery replacement process is unfriendly to ordinary users, which significantly affects the working efficiency of electric tools.

### Summary of the Invention

To overcome the above-mentioned defects, the present invention provides a portable power supply device for an electric tool. The portable power supply device for an electric tool comprises: a housing, a power supply receiving portion, provided in or on the housing and used to receive a power supply supplying power to the electric tool, and a control unit, comprising a controller provided in the housing and used to control the electric energy supplied to the electric tool.

In one embodiment, the power supply receiving portion comprises a power supply compartment. The power compartment is transparent or semi-transparent and is at least partially defined by a cover which can move relative to the housing between an opened position and a closed position. The cover may be provided with a locking member used to releasably retain the cover in the closed position. A biasing component may be further provided for the cover to bias the cover towards the opened position or closed position.

In one embodiment, the cover has a first sealing edge, and the power supply receiving portion or the housing has a second sealing edge aligned with the first sealing edge. A groove may be formed in one of the first sealing edge and the second sealing edge to accommodate at least a part of a sealing component. The other of the first sealing edge and the second sealing edge may have a ridge portion extending outward. When the cover is in the closed position, the ridge portion abuts against the sealing component.

In one embodiment, the control unit further comprises a sensor used to detect the position of the cover, and the controller performs protection operations when the sensor detects that the cover has left the closed position. The protection operations may include at least one of the following operations: immediately cutting off the power supply, starting timing and cutting off the power supply after a predetermined length of time has elapsed since the cover left the closed position, changing the working mode, sending out a visually or audibly perceptible alarm.

In one embodiment, the power supply device comprises a control interface provided on the housing, and the control interface comprises at least one of the following control elements: power switch, working mode selector, output power selector, timer, programmer, menu selector and parameter configurator. The control interface may further comprise a display, used to display at least one of the following items of information: power supply level, working mode, output power, timing information, system menu, parameter setting and alarm information.

In one embodiment, the power supply device comprises a positioning accessory detachably and replaceably attached to the housing and/or the power supply receiving portion. The power supply device may be fixed in different ways by use of different positioning accessories. The positioning accessory may fix the power supply device onto a supporting component with the aid of at least one of the following means: hanging means, fastener, binder, holding means, vacuum pull and magnetic force.

In one embodiment, the power supply device comprises a first joint portion and a second joint portion, and the positioning accessory comprises a third joint portion fitting the first joint portion and a fourth joint portion fitting the second joint portion. The first joint portion and the second joint portion may be provided on the housing and the power supply receiving portion, respectively. At least one of the fit between the first joint portion and the third joint portion and the fit between the second joint portion and the fourth joint portion may be a snap fit.

In one embodiment, the positioning accessory is a holding accessory, which comprises a pair of holding arms pivoting relative to each other and is used to hold the power supply device onto a plate-like supporting component. A first holding arm of the pair of holding arms is fixed onto the power supply device, and a second holding arm is pivotably connected with the first holding arm.

In one embodiment, the positioning accessory is a wall-mounted accessory, which comprises at least one fastener hole, and the fastener hole is configured to receive a fastener fixing the wall-mounted accessory onto a supporting wall. The fastener hole may be formed into a stepped hole.

In one embodiment, the power supply device is independent of the electric tool and supplies power to the electric tool through a power cable. The power cable is detachably connected to a power cable interface provided on the housing. The power cable interface alternatively comprises an adapter to connect power cables in different sizes. The power cable interface may be a power socket.

### Brief Description of the Drawings

Fig. 1 shows the portable power supply device according to one embodiment of the present invention.
Figs. 2A and 2B show the power supply receiving portion of the portable power supply device according to one embodiment of the present invention.
Fig. 3 shows the cover of the portable power supply device according to one embodiment of the present invention.
Fig. 4 shows the control interface of the portable power supply device according to one embodiment of the present invention.
Figs. 5A and 5B show the portable power supply device bonded with the positioning accessory according to one embodiment of the present invention.
Fig. 6 shows the rear side of the portable power supply device according to one embodiment of the present invention.
Fig. 7 shows the positioning accessory in Fig. 5A.
Figs. 8A and 8B show the positioning accessory in Fig. 5B.
Fig. 9 shows a submersible pump used together with the portable power supply device according to one embodiment of the present invention.
Fig. 10 shows the top of the submersible pump.
Fig. 11 shows the working state of the portable power supply device and the submersible pump.

### Specific Embodiments

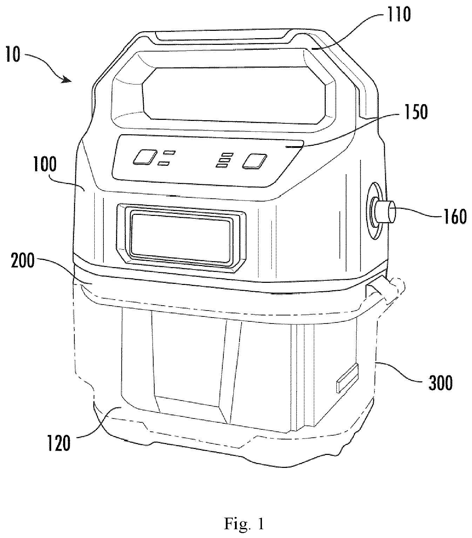

Fig. 1 shows the portable power supply device 10, which is used to supply power to an electric tool according to one embodiment of the present invention. The electric tool may be a handheld tool or garden tool, for example, a cutting tool, a pump, a sprayer, a cleaner, a hair dryer, a lawn mower, or a hedge trimmer. The power supply device 10 comprises a housing 100, a power supply receiving portion 200 used to receive a power supply and a control unit used to control the electric energy supplied to the electric tool. The power supply comprises at least a battery pack detachably mounted in the power supply receiving portion 200, for example, a rechargeable lithium battery pack, and the rated voltage, including but not limited to 9V, 12V, 18V, 24V, 40V, 48V, 60V and 80V, may be selected according to the type of the electric tool. When the power supply comprises a plurality of battery packs, the plurality of battery packs may be connected in series or in parallel, or only some of the battery packs of the plurality of battery packs are electrically connected with the power supply device 10 and the other battery packs are only used as spare battery packs.

The power supply device 10 is independent of the electric tool and supplies power to the electric tool through a power cable. The power cable is detachably connected to a power cable interface 160 provided on the housing 100. The power cable interface 160 alternatively comprises an adapter to connect power cables in different sizes. Preferably, the power cable interface 160 is a power socket. In an embodiment not shown, a charging interface is further provided on the housing 100 of the power supply device 10 and is used to charge battery packs mounted in the power supply receiving portion 200. The power socket and the charging interface may be the same interface.

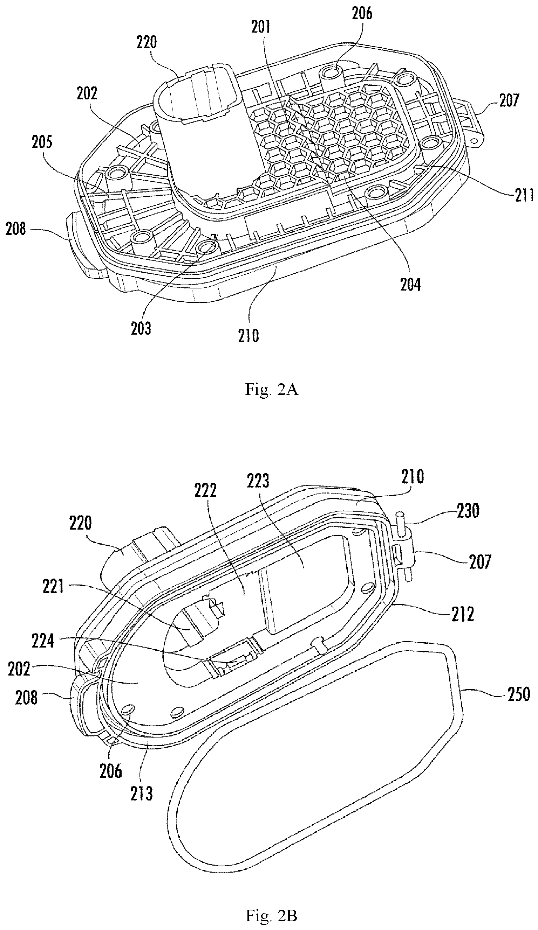

Figs. 2A and 2B show the power supply receiving portion 200 according to one embodiment of the present invention. The power supply receiving portion 200 may be a component independent of the housing 100 and the power supply receiving portion is mounted at the bottom of the housing 100 through fasteners, for example. Fig. 2A shows the upper side of the power supply receiving portion 200. The power supply receiving portion 200 comprises a plate-like body, the body comprises a middle portion 201 and a surrounding portion 202, and the border of the surrounding portion 202 is defined by the surrounding wall 210. In the present embodiment, the shape of the middle portion 201 corresponds to the outline of the battery packs. The middle portion 201 forms a platform 203, and the platform 203 is raised relative to the surrounding portion 202. At least one fastener hole 206 is provided in the surrounding portion 202 and is used to position the fastener (for example, screw) fixing the power supply receiving portion 200 and the housing 100. Preferably, reinforcing members are formed on the middle portion 201 and/or the surrounding portion 202 to increase the strength of the power supply receiving portion 200 without a significant increase of the weight. Fig. 2A shows that honeycomb reinforcing ribs 204 are formed on the middle portion 201 and that radially and circumferentially extending ribs 205 are formed on the surrounding portion 202. It should be understood that reinforcing ribs 204, reinforcing ribs 205 and fastener holes 206 are not a must. The strength of the power supply receiving portion 200 may be improved by use of other means and the power supply receiving portion is fixedly connected with the housing 100.

The surrounding wall 210 of the power supply receiving portion 200 has an upper edge 211, which has a shape that fits the lower edge of the housing 100. Favourably, a sealing member, for example, an O-ring is provided between the upper edge 211 and the lower edge of the housing 100 to prevent a fluid, particles, dust or scraps from entering the housing 100 from outside. After the installation, the power supply receiving portion 200 and the housing 100 form an integrated body, and the power supply receiving portion 200 forms the extension portion at the bottom of the housing 100. That is, besides being used to receive a power supply, the power supply receiving portion 200 is further used as a cover plate covering the bottom opening of the housing 100 in the present embodiment, which helps to reduce the size of the housing 100. In other embodiments, the power supply receiving portion 200 may be provided inside the housing 100 or may be integrated with the housing 100.

A power adapter may be attached to the power supply receiving portion 200. In view of a variety of types of electric tools, the mounting interface of battery packs is designed differently, and the same battery pack usually cannot be used for electric tools of different brands. The power supply receiving portion 200 in the present embodiment forms the cover plate of the housing 100. Therefore, it is convenient for the user to remove and replace the power adapter to match different battery packs, without any space restriction.

Fig. 2B shows the lower side of the power supply receiving portion 200. The power supply receiving portion 200 comprises a guide means 220 used to guide a battery pack, and the guide means guides the battery pack to a correct mounting position. In the present embodiment, the guide means 220 is a hollow column, wherein a guide slot 221 is defined, and the guide slot 221 extends towards the inside of the housing 100 roughly perpendicular to the plane where the body of the power supply receiving portion 200 is located. The shape and size of the guide slot match the guide column on the battery pack (not shown). At least one recessed portion 222, 223 is formed on the bottom surface of the power supply receiving portion 200, and the guide slot 221 extends from the recessed portion 222. The recessed portion 222, 223 corresponds to the platform 203 shown in Fig. 2A and is configured to serve as a positioning portion of the battery pack. When the battery pack is located in the correct mounting position, the guide column of the battery pack is inserted into the guide means 220 of the power supply receiving portion 200, and in addition at least a part of the external surface of the battery pack is accommodated in the recessed portion 222, 223. A battery pack locking portion, for example, a fastener 224 located on the side wall of the recessed portion 222, may be further provided on the power supply receiving portion 200. The fastener 224 is jointed with a locking portion in a corresponding position on the battery pack so that the fastener can releasably lock the battery pack. It should be understood that the guide slot 221, the recessed portions 222, 223 and the fastener 224 shown in Fig. 2B are all designed based on the positioning features on the battery pack to keep the battery pack in the correct mounting position. Guide means, positioning portions and locking portions in other forms also fall within the scope of the present invention. For example, the guide means may be guide rails extending in parallel to the plane in which the body of the power supply receiving portion 200 is located.

To protect the power supply, a power supply compartment may be provided for the power supply device. The power supply device 10 shown in Fig. 1 comprises a power supply compartment 120 used to accommodate battery packs. The power supply compartment 120 may be transparent or semi-transparent to allow the user to observe the condition in the power supply compartment. If water or foreign matters are found in the power supply compartment 120, the user can immediately clean the power supply compartment. This is especially favourable to prevent water from entering the battery pack and/or an electric interface.

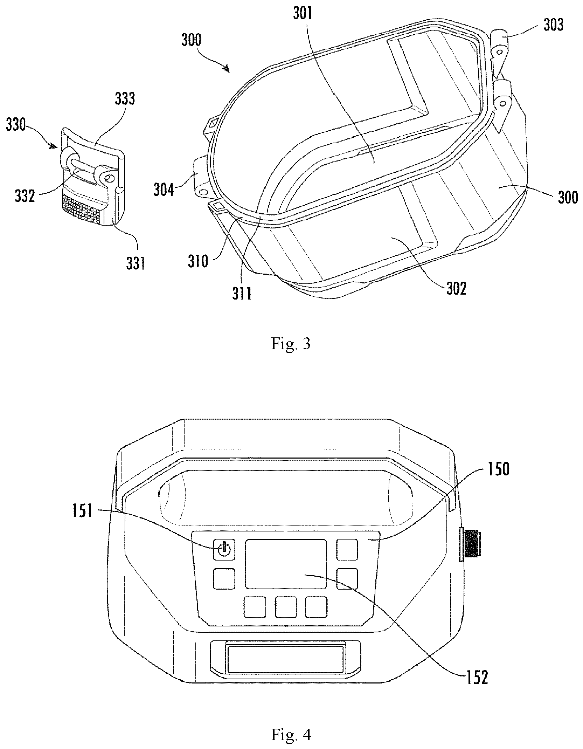

The power supply compartment 120 in Fig. 1 is defined by the power supply receiving portion 200 and the cover 300. In other embodiments, the power supply compartment may be separately defined by the cover 300, or jointly defined by the housing 100 and the cover 300, or jointly defined by the housing 100, the power supply receiving portion 200 and the cover 300. The cover 300 may move relative to the housing 100 and/or the power supply receiving portion 200 between an opened position and a closed position. Fig. 3 shows one embodiment of the cover 300. The pivot 230 (shown in Fig. 2B) passes through the pivot connecting portion 207 located on one side of the power supply receiving portion 200 and the pivot connecting portion 303 located on one side of the cover 300 to pivotably connect the power supply receiving portion 200 and the cover 300. Alternatively, a biasing component, for example, a biasing spring surrounding the pivot 230, is provided for the cover 300. In one embodiment, the biasing spring is configured to bias the cover 300 toward the opened position. If the cover 300 is not locked in the closed position, the biasing spring will force the cover to be at least partially opened, playing the function of giving the user a prompt. In another embodiment, the biasing spring is configured to bias the cover 300 toward the closed position. Even if the cover 300 is not locked in the closed position, the cover 300 can still cover at least a part of the battery pack under the action of the biasing spring, playing the function of protecting the battery pack. It may also be imagined that a proper biasing component is selected to keep the angle the cover 300 is opened within a predetermined range, for example, from 1° to 85°, from 5° to 70°, from 10° to 50°, from 15° to 45°, without any force on the cover 300. On the one hand, the angle the cover 300 is opened can give the user a prompt that the cover 300 is not locked in the closed position. On the other hand, even if the battery pack is not fixed in the correct mounting position for some reason at this time, for example, the battery pack is not completely inserted into the guide slot 221 or the fastener 224 is loosened, the cover 300 can still support the battery pack apart from the power supply receiving portion 200 under the action of the biasing component to prevent the battery pack from dropping off.

The size of the power supply compartment 120 may be designed so that a clearance exists between the power supply and the bottom of the power supply compartment 120 when the power supply (for example, battery pack) is correctly mounted. In the embodiment shown in Fig. 1, the existence of a clearance can be realised by designing the depth of the cover 300 to be greater than the thickness of the battery pack. The size of the power supply compartment 120 may be designed so that a clearance exists between the power supply and the sides of the power supply compartment 120 when the power supply is correctly mounted. In the embodiment shown in Fig. 2A and 2B, the surrounding portion 202 of the body of the power supply receiving portion 200 defines the clearance between the battery pack and the side walls of the power supply compartment 120. If a liquid enters the power supply compartment 120, the liquid will flow through the clearance and accumulate at the bottom of the power supply compartment 120 but will not immediately contact the contacts of the battery pack. As mentioned above, the user can observe the liquid in the power supply compartment 120 through the transparent or semi-transparent cover 300 and clean it immediately. When the power supply device suffers an impact, the cover 300 can absorb the majority of the impact. Even if the cover 300 is deformed because of the impact, the clearance between the cover 300 and the battery pack can also reduce the impact on the battery pack. In addition, air in the clearance can also dissipate heat to some extent.

As an independent component, the power supply receiving portion 200 shown in Fig. 2A and 2B is provided on one side of the housing 100, and the power supply receiving portion 200 comprises a single power supply mounting base to accommodate a single battery pack. In other embodiments, the power supply receiving portion 200 may comprise at least two power supply mounting bases to accommodate two or more battery packs. The at least two power supply mounting bases may be arranged side by side on the same side of the housing 100, for example, at the bottom of the housing, or may be arranged on different sides of the housing, respectively, for example, on the front side, left side and right side. The plurality of battery packs may be connected in series or in parallel to improve the output power or working time of the electric tool.

The cover 300 shown in Fig. 3 has a first sealing edge 310. The surrounding wall 210 of the power supply receiving portion 200 shown in Fig. 2B has a lower edge 212, which is aligned with the first sealing edge 310 and serves as a second sealing edge. When the cover 300 is in the closed position, the first sealing edge 310 is seal-jointed with the second sealing edge 212. Preferably, a groove 213 is formed in one of the first sealing edge 310 and the second sealing edge 212 to accommodate at least a part of a sealing component, and the groove 213 is configured to accommodate at least a part of the sealing component 250. The other of the first sealing edge 310 and the second sealing edge 212 has a ridge portion 311 extending outward. When the cover 300 is in the closed position, the ridge portion 311 abuts against the sealing component 250.

The cover 300 may be locked together with the power supply receiving portion 200 through a locking member 330. One embodiment of the locking member 330 shown in Fig. 3 comprises a latch 331, a pin 332 and a jump ring 333. The latch 331 is pivotably connected with a locking member connecting portion 304 formed on one side of the cover 300 through the pin 332, and the jump ring 333 is pivotably connected to the latch 331. When the locking member 330 is in the locking position, the jump ring 333 is tightly buckled on a protruding portion 208 (shown in Fig. 2B) formed on one side of the cover 300. The user can release the locking by rotating the latch 331. It should be understood that although locking is realised by use of a latch in the present embodiment, a locking member in any form, mechanical, magnetic, electrical or otherwise, is feasible.

In one embodiment, the control unit of the power supply device comprises a sensor used to detect the position of the cover 300. The sensor may be a contact sensor, a pressure sensor, a photoelectric sensor, or a magnetic sensor. The sensor may be provided on the cover 300 or the power supply receiving portion 200 and is electrically connected with a controller (for example, a control PCB) in the housing 100. When the sensor detects that the cover 300 has left the closed position, the controller may perform protection operations in response to a signal the sensor sends out. The protection operations may include at least one of the following operations: immediately cutting off the power supply, starting timing and cutting off the power supply after a predetermined length of time has elapsed since the cover left the closed position, changing the working mode, sending out a visually or audibly perceptible alarm.

Go back to Fig. 1, which shows the gripping portion 110 of the portable power supply device 10. The gripping portion 110 is located at the top of the housing 100 and is arranged opposite to the power supply receiving portion 200. The gripping portion 110 may be a gripping handle integrated with the housing 100 or an independent handle connected to the housing 100. In embodiments not shown, the gripping portion 110 may be pivotably connected to the housing 100. At least a part of the gripping portion 110 may be covered with an elastic material, for example, rubber, to improve the comfort when the user grips the portable power supply device. Preferably, the gripping portion 110 intersects with a vertical line passing through the centre of weight of the whole power supply device.

To help the user to control the power supply device, a control interface 150 allowing the user to interact with the control unit may be provided on the housing 100. Fig. 4 shows one embodiment of the control interface 150. The control interface 150 comprises at least one control element 151, for example, power switch, working mode selector, output power selector, timer, programmer, menu selector and parameter configurator. The control interface 150 may further comprise a display 160, which is used to display at least one of the following items of information: power supply level, working mode, output power, timing information, system menu, parameter setting and alarm information. It should be understood that the control interface 150 may have different designs to adapt to specific applications of different electric tools.

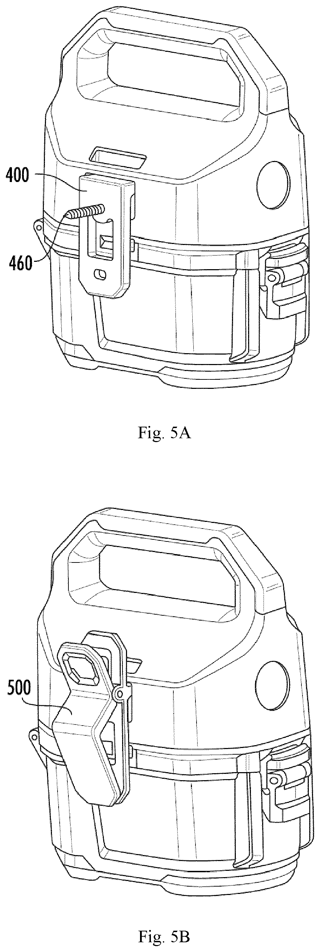

The portable power supply device may be supported on the ground or other horizontal supporting surfaces through a base. In the embodiment shown in Fig. 1, the cover 300 located at the bottom of the power supply device serves as a base. To reduce the wear, a wear-resistant member may be provided in a position where the cover 300 contacts the horizontal supporting surface. In some scenarios, the user may expect to fix the power supply device 10 onto a non-horizontal supporting component, for example, a vertical wall or a bend surface. Fig. 5A and 5B show the portable power supply device bonded with a positioning accessory. The positioning accessories 400, 500 are detachably and replaceably attached to the housing 100 and/or the power supply receiving portion 200. Favourably, the power supply device may be fixed in different ways by use of different positioning accessories. In a non-restrictive embodiment, the positioning accessory may fix the power supply device onto a supporting component with the aid of at least one of the following means: hanging means, fastener, binder, holding means, vacuum pull and magnetic force. For example, when fixing is realised by use of hanging means, the positioning accessory may comprise a hook. When fixing is realised by use of a vacuum pull, the positioning accessory may comprise a sucker. The user may select positioning accessories according to different environments so that the same power supply device can adapt to different application scenarios.

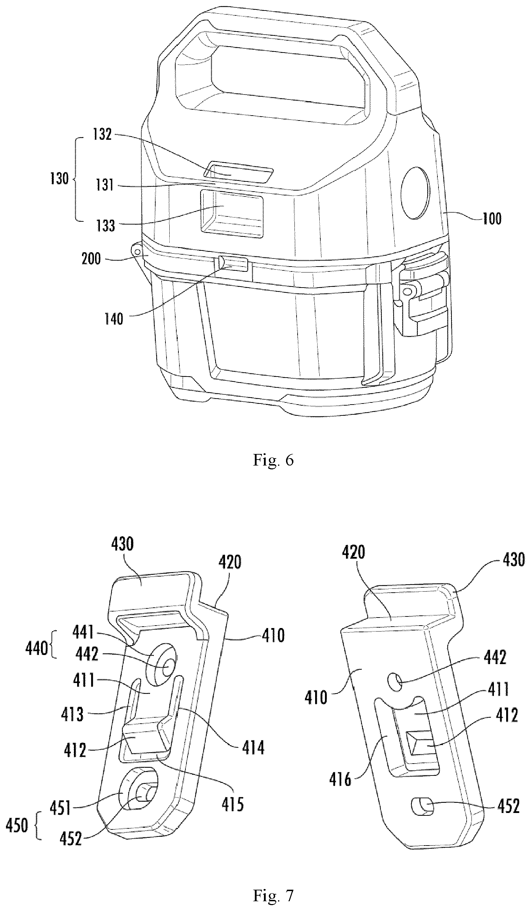

To help the user to remove and replace positioning accessories and meanwhile guarantee a solid connection, it is favourable to use at least two groups of joint portions fitting each other to realise the connection between the positioning accessories and the power supply device. Fig. 6 shows the rear side of the power supply device, and a first joint portion 130 and a second joint portion 140 are formed on the rear side. The first joint portion 130 comprises a connecting strip 131, a first concave portion 132 and a second concave portion 133. The first concave portion 132 and the second concave portion 133 are separated by the connecting strip 131, with the openings in different directions. The second joint portion 140 is formed into a card slot and is located below the first joint portion 130. In the present embodiment, the first joint portion 130 is formed on the housing 100. Specifically, the opening of the first concave portion 132 faces the upper side of the housing 100, the opening of the second concave portion 133 faces the rear side of the housing 100, and the connecting strip 131 is integrated with the housing 100. The second joint portion 140 is formed on the surrounding wall of the power supply receiving portion 200. It should be understood that the structures and positions of the first joint portion 130 and the second joint portion 140 can be changed. For example, the two joint portions 130, 140 may both be formed on the housing 100, or the second joint portion 140 is formed on the cover 300.

Fig. 7 shows a positioning accessory 400, which serves as a wall-mounted accessory. The positioning accessory 400 is designed to fix the power supply device onto a supporting wall, for example, a wall, with the aid of fasteners. The positioning accessory 400 comprises a mounting plate 410, a supporting portion 420 extending in a first direction from the mounting plate 410, and a connecting portion 430 extending in a second direction from the supporting portion 420. In the present embodiment, the supporting portion 420 is roughly perpendicular to the plane where the mounting plate 410 is located, and the connecting portion 430 is roughly parallel to the plane where the mounting plate 410 is located. At least one fastener hole 440, 450 is formed in the mounting plate 410 and is used to accommodate a fastener 460 (shown in Fig. 5A) (for example, a screw) fixing the positioning accessory 400 onto a supporting wall. The fastener holes 440, 450 may have different shapes or sizes to adapt to different fasteners. The fastener holes 440, 450 shown in Fig. 7 are stepped holes, which respectively comprise an outer hole 441, 451 and an inner hole 442, 452; the outer hole and the inner hole of the fastener hole are configured to accommodate the head and the body of the fastener, respectively.

An elastic portion 411 is provided in the middle of the mounting plate 410 and the elastic portion is separated from the other parts of the mounting plate 410 through the clearances 413, 414 and 415. The elastic portion 411 may be integrated with the mounting plate 410, with the thickness less than the thickness of any other part of the mounting plate 410. The elastic portion 411 may be obtained by removing a part of the mounting plate 410 from the rear side and the removed part forms a recess 416. A snap-in portion 412 is provided at one end of the elastic portion 411. When a force is exerted on the snap-in portion 412, the elastic portion 411 can bend and at least partially enter the recess 416.

In the embodiment shown in Fig. 7, the supporting portion 420 and connecting portion 430 of the positioning accessory 400 forms a third joint portion, and the third joint portion fits the first joint portion 130 on the power supply device. The snap-in portion 420 of the positioning accessory 400 forms a fourth joint portion, and the fourth joint portion fits the second joint portion 140 on the power supply device. When mounting the power supply device, the user first uses the fastener 460 to fix the positioning accessory 400 onto a wall, with the rear side of the mounting plate 410 in close contact with the wall surface. Then, the user moves the power supply device to let the connecting portion 430 of the positioning accessory 400 enter the first concave portion 132 on the housing 100 and let the connecting strip 131 on the housing 100 abut against the supporting portion 420 of the positioning accessory 400, thus completing the fitting between the first joint portion and the third joint portion. Finally, the user pushes the power supply device toward the positioning accessory 400 until the snap-in portion 420 of the positioning accessory 400 is jointed with the card slot in the power supply receiving portion 200, thus completing the fitting between the second joint portion and the fourth joint portion. In this way, the positioning accessory 400 is fixedly connected with the housing 100 and the power supply receiving portion 200 through the third and fourth joint portions. Even if the snap-in portion 420 is separated from the card slot in the power supply receiving portion 200, the supporting portion 420 of the positioning accessory 400 can also separately provide support for the power supply device.

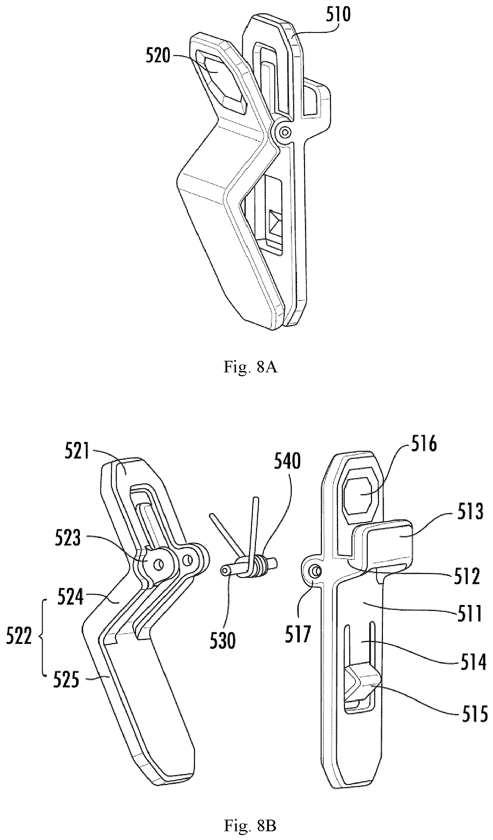

Fig. 8A shows another positioning accessory 500, which serves as a holding accessory. The positioning accessory 500 comprises a pair of holding arms 510, 520 pivoting relative to each other and allows the power supply device to be held onto a plate-like supporting component. A first holding arm 510 of the pair of holding arms is fixed onto the power supply device, and a second holding arm 520 is pivotably connected with the first holding arm 510 through a pivot 530. The biasing component 540 surrounding the pivot 530 exerts a clamping force on the first holding arm 510 and the second holding arm 520.

Fig 8B is an exploded view of the positioning accessory 500. Similar to the positioning accessory 400 shown in Fig. 7, the first holding arm 510 comprises a mounting plate 511, a supporting portion 512 extending from the mounting plate 511, a connecting portion 513 extending from the supporting portion 512, an elastic portion 514 and a snap-in portion 515. The differences between the two positioning accessories are that the mounting plate 511 of the first holding arm 510 has a gripping portion 516 extending beyond the supporting portion 512 and helping the user to exert a force on the first holding arm 510 and that the first holding arm 510 further comprises a pivot receiving portion 517.

The second holding arm 520 of the positioning accessory 500 comprises a gripping portion 521, a holding portion 522 and a pivot receiving portion 523. The holding portion 522 consists of two holding pieces 524, 525 forming a certain angle, and the lower holding piece 525 is roughly parallel to the gripping portion 521. It should be understood that the holding portion 522 may have different configurations. For example, the holding portion consists of a single or more than three holding pieces or has a bent outline. The holding portion may be designed according to the expected maximum holding force. Alternatively, a plurality of positioning accessories 500 are provided for the power supply device 10, and the plurality of positioning accessories have different maximum holding sizes so that the user can select a positioning accessory according to the actual application scenario. When mounting the power supply device, the user can first use the gripping portions 516, 521 to open the holding arms 510, 520 and keep them clamped on the plate-like supporting component, and then follow the way described above to fix the power supply device 10 onto the positioning accessory 500 through the fittings between two groups of joint portions. The user can also first fix the power supply device 10 onto the positioning accessory 500 to let the positioning accessory 500 form a part of the power supply device, and then keep the holding arms 510, 520 clamped on the plate-like supporting component.

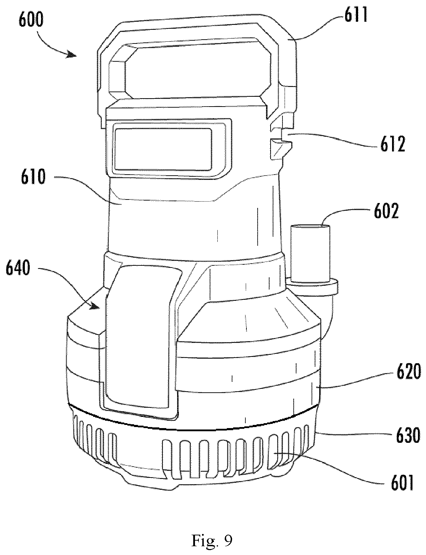

One application of the portable power supply device according to the present invention is described below in combination with Figs. 9-11. Fig. 9 shows a submersible pump, which is used for pumping a fluid, for example, water. The inlet 601 of the submersible pump 600 is defined by the base 630, and the outlet 602 extends outward from the side wall and is used for connecting a drain pipe, for example, a garden hose. The housing of the submersible pump 600 comprises a driving unit housing 610 and a pumping unit housing 620. A driving unit is provided in the driving unit housing 610, and the driving unit may be a motor, for example, a brushless DC motor or a brushed DC motor. A pumping unit is provided in the pumping unit housing 620, and the pumping unit comprises a pumping chamber and an impeller located in the pumping chamber and driven by a motor. The impeller may be a centrifugal impeller or an axial-flow impeller. The pumping unit housing 620 is detachably mounted on the driving unit housing 610 to help the user to replace the motor or impeller when necessary. The base 630 is connected to the pumping unit housing 620 and is used to stably support the whole submersible pump. When the submersible pump is used to pump water from a pool or a water tank, the base 300 can contact the bottom wall of the pool or water tank.

The submersible pump 600 further comprises a float control unit 640, which is used to detect the liquid surface position of a fluid source and control the working of the submersible pump based on the liquid surface position. The float control unit 640 may be kept on the outer wall of the submersible pump or formed into a part of the outer wall of the submersible pump. Therefore, no relative motion or collision will happen between the float control unit 640 and the submersible pump 600 when the submersible pump works.

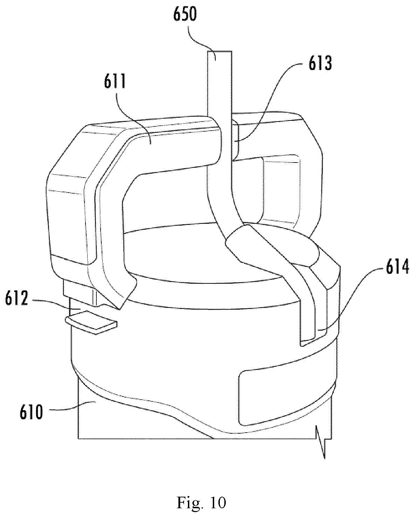

Fig. 10 shows the top of the submersible pump 600. The submersible pump 600 comprises a handle 611 for the user to grip, and the handle 611 may be integrated with the driving unit housing 610. A power cable 650 protrudes from the edge 614 of the driving unit housing 610. A power cable retaining trough 613 may be formed in the handle 611, and the power cable retaining trough is roughly located in the middle of the handle 611 and extends in the vertical direction. When the user lifts the submersible pump 600 by virtue of the power cable 650, the submersible pump will not tilt significantly, the base 630 of the submersible pump is kept roughly horizontal, and the user can smoothly put down the submersible pump and place it at the bottom wall of a pool or water tank. To help to accommodate the power cable 650, at least one groove 612 may be formed in the outer wall of the driving unit housing 610. When the submersible pump is not used, the user can wind the power cable 650 around the housing and fix the power cable by virtue of the groove 612 to prevent the power cable from dropping off.

When the submersible pump is used, the user first connects the two ends of the power cable 650 to the submersible pump 600 and the power cable interface 160 of the power supply device, respectively, and then steadily places the submersible pump 600 in a working position, for example, a pool or a water source container. If a supporting wall is available near the working position, the power supply device may be fixed onto the supporting wall with the aid of the positioning accessory 400. The user can start the submersible pump and set the parameters such as pumping mode, output power and pumping time through the control interface 160 on the housing 100 of the power supply device. The display 160 can display various items of information, for example, remaining power energy, pumping mode, output power and timing information, in real time. When the energy of the battery pack is used up, the user can open the cover 300 to replace the battery pack, without having to take the submersible pump 600 out of the pool or water tank.

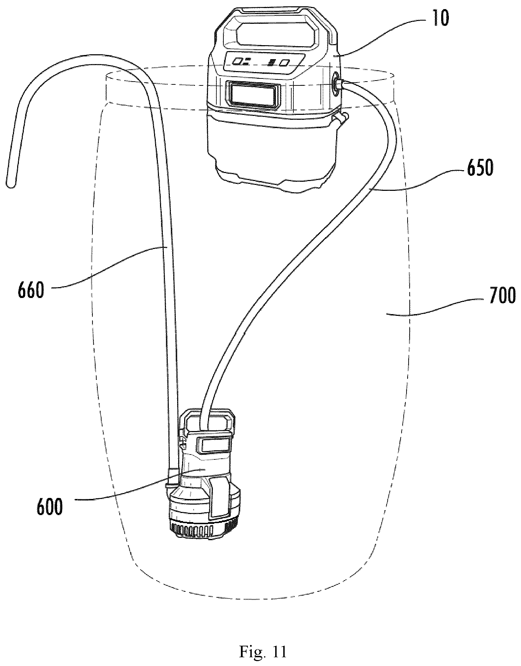

Fig. 11 shows a working state of the power supply device 10 and the submersible pump 600. The submersible pump 600 is placed at the bottom of a water tank 700. The user can use the positioning accessory 500 to clamp the power supply device 10 onto the wall of the water tank 700. The power supply device 10 supplies power to the submersible pump 600 through the power cable 650. The outlet of the submersible pump is connected to a water pipe 660 to drain water to a predetermined position.

The portable power supply device according to the present invention can supply power to other equipment, besides traditional electric tools (including various handheld tools and garden tools). In one embodiment, a lighting device comprises the portable power supply device and a lamp string electrically connected with the power supply device. The lighting device can be used as an accessory of an electric tool to provide a light source for the user at work or can be separately used for lighting.

Although the present invention has been described in detail in combination with finite implementation schemes, it should be understood that the present invention is not limited to the disclosed implementation schemes. Those skilled in the art can imagine other implementation modes complying with the spirit and scope of the present invention, including a change in the number of components, and changes, replacements or equivalent arrangements of components, and all those implementation modes fall within the scope of protection of the present invention.

## Claims

1. Portable power supply device for an electric tool, comprising
a housing (100);
a power supply receiving portion (200), provided in or on the housing and used to receive a power supply supplying power to the electric tool;
a control unit, comprising a controller that is provided in the housing and is used to control the electric energy supplied to the electric tool.

2. Portable power supply device according to Claim 1, **characterised in that** the power supply is a battery pack detachably mounted in the power supply receiving portion, preferably, the power supply receiving portion comprises a guide means used to guide the battery pack, for example, a guide slot (220) or guide rail, and more preferably, the power supply receiving portion comprises a locking portion (224) used to releasably fix the battery pack.

3. Portable power supply device according to Claim 1 or 2, **characterised in that** the power supply receiving portion comprises at least two power supply mounting bases, and preferably, the at least two power supply mounting bases are arranged side by side on the same side of the housing or arranged on different sides of the housing.

4. Portable power supply device according to any of Claims 1 to 3, **characterised in that** the power supply receiving portion comprises a power supply compartment (120), preferably, the power supply compartment is transparent or semi-transparent and is at least partially defined by a cover (300) which can move relative to the housing between an opened position and a closed position, preferably, the cover is provided with a locking member (330) and the locking member releasably retains the cover in the closed position, and more preferably, a biasing component is provided for the cover and the biasing component biases the cover towards the opened position or closed position.

5. Portable power supply device according to Claim 4, **characterised in that** a clearance exists between the power supply and the bottom of the power supply compartment (120), and preferably a clearance exists between the power supply and the sides of the power supply compartment.

6. Portable power supply device according to Claim 4, **characterised in that** the cover has a first sealing edge (310), the power supply receiving portion or the housing has a second sealing edge (212) aligned with the first sealing edge, and the first sealing edge is seal-jointed with the second sealing edge; preferably, a groove (213) is formed in one of the first sealing edge and the second sealing edge, the groove is used to accommodate at least a part of a sealing component (250); preferably, the other of the first sealing edge and the second sealing edge has a ridge portion (311) extending outward, and when the cover is in the closed position, the ridge portion abuts against the sealing component.

7. Portable power supply device according to any of Claims 4 to 6, **characterised in that** the control unit further comprises a sensor used to detect the position of the cover, and the controller performs protection operations when the sensor detects that the cover has left the closed position, and preferably, the protection operations include at least one of the following operations: immediately cutting off the power supply, starting timing and cutting off the power supply after a predetermined length of time has elapsed since the cover left the closed position, changing the working mode, sending out a visually or audibly perceptible alarm.

8. Portable power supply device according to any of Claims 1 to 7, **characterised in that** the housing comprises a gripping portion (110) and the gripping portion and the power supply receiving portion are arranged opposite one another.

9. Portable power supply device according to any of Claims 1 to 8, **characterised in that** the portable power supply device further comprises a control interface (150) provided on the housing, and the control interface comprises at least one of the following control elements: power switch, working mode selector, output power selector, timer, programmer, menu selector and parameter configurator, and preferably, the control interface further comprises a display (160) used to display at least one of the following items of information: power supply level, working mode, output power, timing information, system menu, parameter setting and alarm information.

10. Portable power supply device according to any of Claims 1 to 9, **characterised in that** the power supply device further comprises positioning accessories (400, 500) detachably and replaceably attached to the housing and/or the power supply receiving portion, preferably, the power supply device comprises at least two positioning accessories to fix the power supply device in at least two different ways, and preferably, the positioning accessory fixes the power supply device onto a supporting component with the aid of at least one of the following means: hanging means, fastener, binder, holding means, vacuum pull and magnetic force.

11. Portable power supply device according to Claim 10, **characterised in that** the power supply device comprises a first joint portion (130) and a second joint portion (140), the positioning accessory comprises a third joint portion fitting the first joint portion and a fourth joint portion fitting the second joint portion, preferably, at least one of the fit between the first joint portion and the third joint portion and the fit between the second joint portion and the fourth joint portion is a snap fit, and preferably, the first joint portion (130) and the second joint portion (140) are provided on the housing (100) and the power supply receiving portion (200), respectively.

12. Portable power supply device according to Claim 10 or 11, **characterised in that** one of the at least two positioning accessories is a holding accessory (500), which comprises a pair of holding arms (510, 520) pivoting relative to each other.

13. Portable power supply device according to any of Claims 10 to 12, **characterised in that** one of the at least two positioning accessories is a wall-mounted accessory (400), which comprises at least one fastener hole (440, 450), the fastener hole is configured to receive a fastener (460) fixing the wall-mounted accessory onto a supporting wall, and preferably, the fastener hole is formed into a stepped hole.

14. Portable power supply device according to any of Claims 10 to 13, **characterised in that** the power supply device is independent of the electric tool and supplies power to the electric tool through a power cable, the power cable is detachably connected to a power cable interface (160) provided on the housing, preferably, the power cable interface alternatively comprises an adapter to connect power cables in different sizes, and preferably, the power cable interface is a power socket.

15. Portable power supply device according to any of Claims 1 to 14, **characterised in that** the electric tool includes a pump, in particular, a submersible pump (600).
